# EUROPÄISCHE PATENTSCHRIFT

(11) **EP 2 050 929 B1**
(45) Veröffentlichungstag und Bekanntmachung des Hinweises auf die Patenterteilung: **21.10.2009**
(21) Anmeldenummer: 08170288.8
(22) Anmeldetag: 02.06.2004
(51) Int. Cl.: F01D 5/14, F01D 5/16, F01D 25/06

(54) **Verdichterschaufel, insbesondere für den Fan von Flugzeugtriebwerken**
Compressor blade, especially for the fan on plane engines
Aube de compresseur, notamment pour le ventilateur de turbines d'avions

(43) Veröffentlichungstag der Anmeldung: 22.04.2009
(62) Teilanmeldung aus: 04090215.7
(73) Patentinhaber: Rolls-Royce Deutschland Ltd & Co KG, 15827 Blankenfelde-Mahlow (DE)
(72) Erfinder: Johann, Erik, 12103 Berlin (DE)
(74) Vertreter: Wablat, Wolfgang

(56) Entgegenhaltungen:
- EP-A- 0 937 862
- DE-A1- 10 054 244
- US-A- 5 313 700
- US-B1- 6 264 429

## Beschreibung

Die Erfindung bezieht sich auf eine Verdichterschaufel, insbesondere für den Fan von Flugzeugtriebwerken.

Die bei bestimmten Bauarten von Verdichtern für Flugzeugtriebwerke verwendeten Verdichterschaufeln mit großer Sehnenlänge sind unter bestimmten Betriebsbedingungen einer Belastung ausgesetzt, die zu einer Beschädigung oder Verminderung der Lebensdauer der Verdichterschaufel und der Verdichterscheibe führen können.

Aus US-B1-6.264.429 ist eine Kompressorschaufel bekannt, die derart ausgebildet ist, dass insbesondere geringe aerodynamische Verluste dann auftreten, wenn eine Strömung um die Kompressorschaufel herum mit eine großen Reynold'schan Zahl und einem hohen Grad an Turbulenzen auftritt.

Zur Verminderung der Festigkeitsbeanspruchung der Verdichterschaufeln ist es bekannt, auf deren Saugseite in bestimmtem Abstand von der Schaufelvorderkante und parallel zu dieser und deutlich vor dem Bereich der auf die Schaufel wirkenden Verdichtungsstöße ein Strömungsübergangs-Fixierungsmittel in Form einer Oberflächenrauhigkeit auszubilden. Durch die örtliche Fixierung des Transitionsbereichs im Abstand von dem Verdichtungsstoßbereich wird eine Kopplung der beiderseitigen Oszillation im Transitions- und Verdichtungsstoßbereich unterdrückt oder zumindest eingeschränkt und letztlich auch die oszillierende Bewegung der Verdichtungsstöße verhindert oder soweit begrenzt, dass deren schwingungsverstärkende Rückwirkung auf die unter bestimmten Flugbedingungen auftretenden Eigenschwingungen der Verdichterschaufel, die schließlich zur Beschädigung der Verdichterschaufeln und der Verdichterscheibe führen kann, verhindert.

Der Erfindung liegt die Aufgabe zugrunde, diese Nachteile zu vermeiden.

Diese Aufgabe wird erfindungsgemäß mit einer gemäß den Merkmalen des einzigen Patentanspruches ausgebildeten Verdichterschaufel gelöst. Damit wird die Verdichterschaufel zur Vermeidung der unter bestimmten Betriebsbedingungen an den Verdichterscheiben und -schaufeln auftretenden Schäden konstruktiv so ausgebildet, dass unabhängig von der Fixierung des Strömungsübergangspunktes durch eine Oberflächenrauhigkeit auf der Verdichterschaufel-Saugseite die Oszillation der Verdichtungsstöße (Saugseitenstöße) und deren schwingungsverstärkende Kopplung an die Eigenschwingungen der Schaufeln verhindert oder zumindest wesentlich eingeschränkt werden.

Das Wesen der Erfindung liegt in einer besonderen Gestaltung der Schaufelvorderkante derart, dass der dort wirkende Vorderkantenstoß nicht von der Vorderkante abreißt, sondern vielmehr an dieser anliegt, um in geringem Abstand von der Vorderkante die Transition von der laminaren in die turbulente Grenzschichtströmung zu bewirken und diese in dem von der Vorderkante ausgehenden kontinuierlichen Krümmungsverlauf der Saugseite nicht zu beschleunigen und damit konstant zu halten bzw. nicht zu relaminisieren. Der Transitionspunkt, dessen periodische Bewegung weitgehend unterdrückt ist und der zudem weit genug von dem Verdichtungsstoß auf der Saugseite entfernt ist, kann mithin nicht mit diesem kommunizieren und nicht schwingungsverstärkend auf diesen wirken. Dadurch wird die Rückwirkung der Schwingungen des Verdichtungsstoßes auf die unter bestimmten Flugbedingungen kritischen Eigenschwingungen unterdrückt oder zumindest so weit begrenzt, dass diese Eigenschwingungen nicht bzw. nicht soweit verstärkt werden, dass es durch eine die Festigkeitsgrenzen überschreitende Überbeanspruchung zu Materialschäden an den Verdichterschaufeln und/oder der Verdichterscheibe kommt.

Die Gestalt der Schaufelvorderkante kann beispielsweise sehr schlank ellipsenförmig oder parabolisch - mit einem Ellipsenverhältnis der kurzen Halbsehne zur langen Halbsehne gleich oder kleiner als eins zu vier - ausgeführt sein, wobei der Krümmungsverlauf auf der Saugseite kontinuierlich weiter verläuft. Diese Ausbildung bewirkt, dass der Vorderkantenstoß an der Vorderkante anliegt, die anfangs laminare Grenzströmung rasch, d.h. in geringem Abstand von der Schaufelvorderkante, in eine turbulente Grenzströmung umgewandelt und nicht beschleunigt und relaminisiert wird und der Transitionspunkt mithin nicht periodisch bewegt wird.

Die Vorderkante kann in dem oberen, eigenschwingungskritischen Bereich auch eine verzahnte Struktur oder taschenförmige Vertiefungen oder auch einen zurückgeschnittenen, als Pfeilung wirkenden Bereich aufweisen, um die oben erwähnten Wirkungen zu erzielen. Darüber hinaus sind auch andere Gestaltungen der Schaufelvorderkante denkbar, die ein Anlegen des Vorderkantenstoßes an die Schaufelvorderkante gewährleisten und entlang dem anschließenden saugseitigen Krümmungsverlauf eine Beschleunigung und Relaminisierung der turbulenten Grenzschichtströmung vermeiden. Es werden lokale Störungen in der Grenzschicht erzeugt, die die Strömungsübergangsfixierung fördern.

Gemäß einem wesentlichen Merkmal der Erfindung ist die Saugseite bei einer in üblicher Weise ausgebildeten Vorderkante mit abgerissenem Vorderkantenstoß als S-Schlag ausgebildet, um eine rasche Transition sowie die Stabilisierung der turbulenten Grenzschichtströmung zu bewirken. Es ist jedoch auch möglich, diesen Krümmungsverlauf auf der Saugseite mit einer Vorderkantenstruktur, die das Anlegen des Vorderkantenstoßes bewirkt, zu kombinieren.

Die erfindungsgemäße Verdichterschaufel ist nachfolgend anhand von Zeichnungen näher erläutert. Es zeigt:
- Fig. 1: eine Schnittansicht der Verdichterschaufel mit modi- fizierter Vorderkante, einschließlich der grafischen Darstellung des an der Vorderkante der Verdichter- schaufel anliegenden Stoßes und an der Saugseite wirkenden Verdichtungsstoßes sowie der entsprechen- den Grenzschichtströmung,
- Fig. 2: eine Seitenansicht eines Teils der Verdichterschau- fel mit einer gegenüber der in Fig. 1 dargestellten Schaufel anderen Gestaltung der Vorderkante,
- Fig. 3: eine Seitenansicht des Teils der Verdichterschaufel nach Fig. 2, jedoch mit einer gegenüber dieser modi- fizierten Gestaltung der Vorderkante,
- Fig. 4: eine Seitenansicht einer weiteren modifizierten Gestaltung der Verdichterschaufel und
- Fig. 5: eine Schnittansicht der Verdichterschaufel nach Fig. 1, jedoch mit nicht stetigem Krümmungsverlauf und dementsprechendem Grenzschichtströmungsverlauf auf der Saugseite.

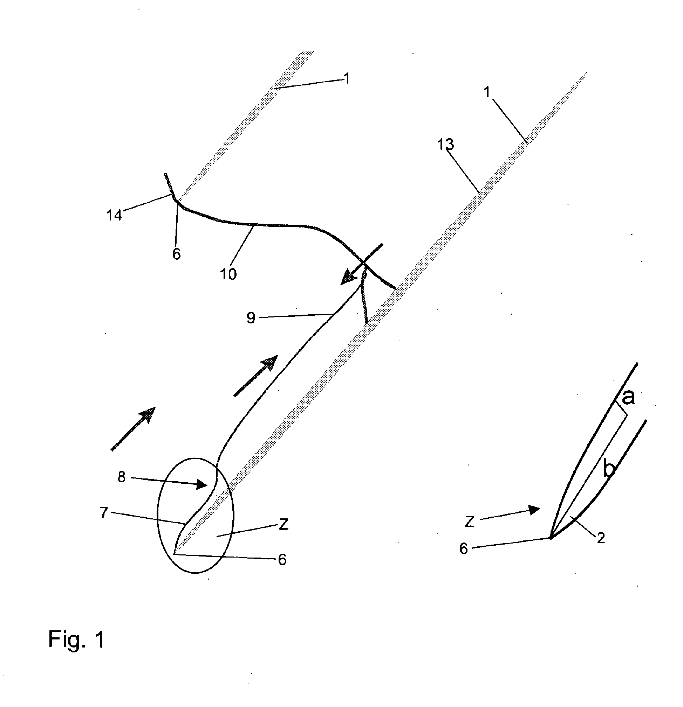

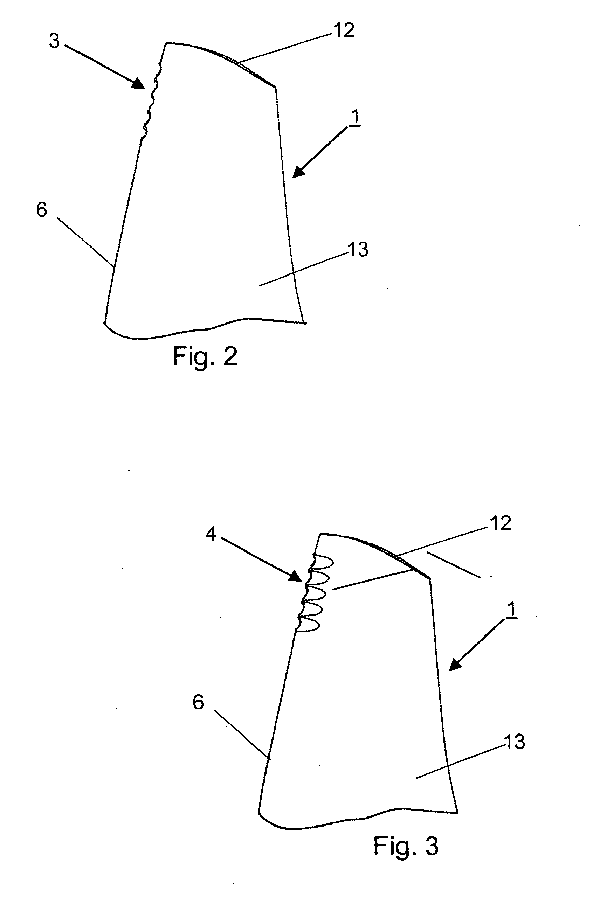

Die in den Figuren 1 bis 4 dargestellten Verdichterschaufeln 1 weisen in einem mit Bezug auf die Schaufelspitze 12 oberen Bereich eine spezifische Gestaltung der Schaufelvorderkantenstruktur 2 bis 5 der Schaufelvorderkante 6 auf, wodurch in diesem Schaufelbereich, wie in Fig. 1 dargestellt, ein Anlegen des Vorderkantenstoßes 14 unmittelbar an der Schaufelvorderkante 6 und infolgedessen auf der Saugseite 13 der Verdichterschaufel 1 der in Fig. 1 wiedergegebene Grenzschichtströmungsverlauf erreicht wird. Das heißt, die in Fig. 1 dargestellten Verhältnisse treten auch bei den in den Figuren 2 bis 4 gezeigten Verdichterschaufeln 1 auf.

Gemäß der in Fig. 1 gezeigten ersten Schaufelvariante hat die Schaufelvorderkante ein elliptisches oder auch ein parabolisches Querschnittsprofil 2, wobei das Verhältnis der beiden Halbachsen a/b kleiner oder gleich 1/4 ist. Das heißt, der Krümmungsradius der Vorderkante ist klein und die Schaufeldicke ist dementsprechend gering. Die Verdichterschaufel 1 weist im Querschnitt einen kontinuierlichen Krümmungsverlauf auf.

Bei der zweiten Schaufelvariante nach Fig. 2 ist in einem oberen Bereich der Schaufelvorderkante 6 eine Verzahnung 3 ausgebildet. Dabei wird im Wesentlichen ein Grenzschichtströmungsverlauf erzielt, der mit dem in Fig. 1 gezeigten übereinstimmt.

Gemäß der dritten Schaufelvariante nach Fig. 3 sind anstelle der Verzahnung an der Schaufelvorderkante 6 nebeneinander mehrere taschenförmige Ausnehmungen 4 ausgebildet, die im Wesentlichen den gleichen Effekt wie die oben beschriebene Verzahnung oder die Schaufelvorderkante 6 mit dem angegebenen Ellipsenverhältnis haben.

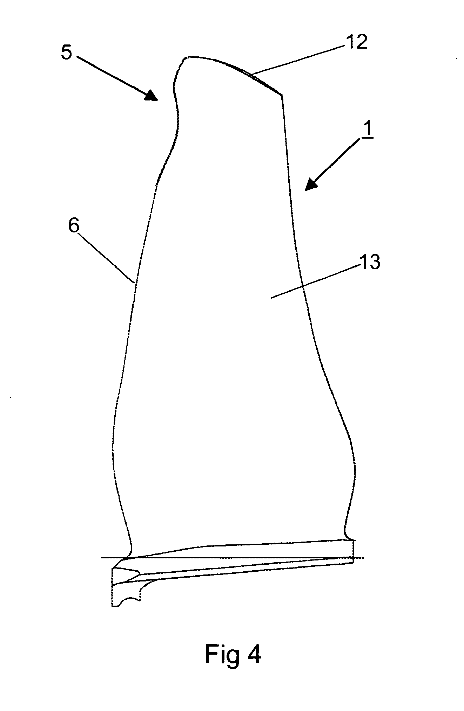

Gemäß der vierten Schaufelvariante nach Fig. 4 einer an der Schaufelvorderkante 6 gestalteten Verdichterschaufel 1 weist die Schaufelvorderkante 6 im oberen Bereich einen zurückgeschnittenen gekrümmten Abschnitt 5 zur Ausbildung einer Vorderkantenpfeilung auf. Wegen der dadurch bedingten unterschiedlichen Anströmung und des geänderten Verhältnisses zwischen der Anströmmachzahl und der Relativmachzahl wird auch in diesem Fall in dem betreffenden Vorderkantenbereich ein Anlegen des Stoßes an die Schaufelvorderkante 6 bewirkt.

Auch bei den Schaufelkonstruktionen nach Fig. 2 bis 4 weist die Schaufel bei geringer Dicke saugseitig einen kontinuierlichen Krümmungsverlauf auf.

Die in den Ausführungsvarianten 1 bis 4 gezeigte Gestaltung der Schaufelvorderkante 6 in Verbindung mit dem Anliegen des Stoßes an dieser hat zur Folge, dass die anfangs laminare Grenzschichtströmung 7 schon in einem im geringen Abstand hinter der Schaufelvorderkante 6 liegenden Transitionspunkt 8 in eine turbulente Grenzschichtströmung 9 umschlägt und die Beschleunigung der Strömung ein bestimmtes Maß nicht überschreitet, so dass die turbulente Grenzschichtströmung 9 nicht relaminisiert wird, das heißt, turbulent bleibt. Die Schwingung des Transitionspunktes 8 ist mithin gering und sein Abstand von dem auf die Saugseite 13 der Verdichterschaufel 1 wirkenden Verdichtungsstoß 10, der üblicherweise in der Größenordnung von 45 bis 70% der Schaufelbreite von der Schaufelvorderkante 6 entfernt ist, ist so groß, dass eine schwingungsverstärkende Rückwirkung auf den saugseitigen Verdichtungsstoß 10 unterbleibt oder zumindest begrenzt ist. Da der Verdichtungsstoß 10 nicht mit der Grenzschichtströmung 7, 9 bzw. der unterbundenen periodischen Bewegung des Transitionspunktes 8 der Grenzschichtströmung kommunizieren kann, ist die Oszillation des Verdichtungsstoßes soweit eingeschränkt, das der Kopplungseffekt zwischen den an der Verdichterschaufel 1 unter bestimmten Bedingungen (Reynoldszahl, Machzahl, Strouhalzahl) auftretenden Eigenschwingungen (zweite und dritte Biegeschwingung, erste Torsionsschwingung) und den Verdichtungsstoßschwingungen unterdrückt wird und somit die Eigenschwingungen eine zur Beschädigung der Verdichterschaufeln und der Verdichterscheibe führende Größenordnung nicht überschreiten.

Gemäß den in den Figuren 1 bis 4 gezeigten Schaufelkonstruktionen hat die Verdichterschaufel 1 mit der jeweiligen speziellen Ausbildung der Schaufelvorderkante 6 auf der Saugseite 13 einen von der Vorderkante ausgehenden kontinuierlichen Krümmungsverlauf.

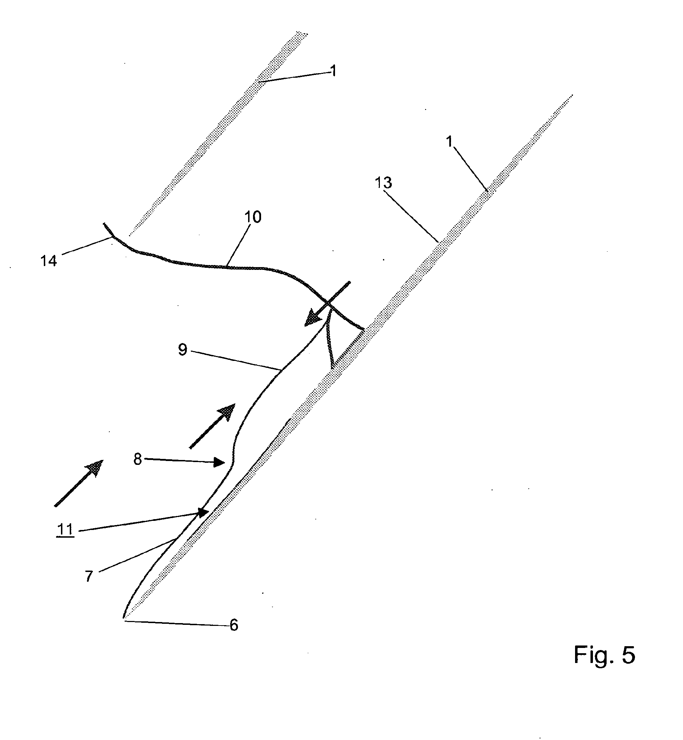

Gemäß der in Fig. 5 gezeigten Schaufelvariante ist die Krümmung an der Saugseite der Verdichterschaufel 1 als S-Schlag ausgeführt, wonach im vorderen Bereich der Verdichterschaufel 1 eine konkav gekrümmte Mulde 11 ausgebildet ist. Die an der Saugseite 13 verlaufende laminare Grenzschichtströmung 7 erfährt in der Mulde 11 eine Druckerhöhung, so dass in dem so vorgegebenen Transitionspunkt 8 ein Umschlag in die turbulente Grenzschichtströmung 9 erfolgt. Dabei ist die Beschleunigung am Ende der Mulde 11 so gering, dass die turbulente Grenzschichtströmung 9 konstant bleibt und vor dieser liegende Instabilitäten gedämpft werden. Grundsätzlich kann im Falle der nach Fig. 5 unstetig gekrümmten Saugseite der Verdichterschaufel 1 deren Vorderkante 6 in der üblichen Weise, das heißt, dicker bzw. mit einem Ellipsenverhältnis von beispielsweise a/b gleich 1/2 ausgebildet sein. Vorzugsweise wird aber die unstetig gekrümmte Form der Saugseite in Kombination mit einer der in den Figuren 1 bis 4 wiedergegebenen Ausführungsvarianten angewendet, um die turbulente Grenzschichtströmung noch besser zu stabilisieren und eine Relaminisierung und damit die periodische Bewegung des Transitionspunktes zu verhindern.

### Bezugszeichenliste

- 1: Verdichterschaufel
- 2: Schaufelvorderkantenstruktur: elliptisch
- 3: Schaufelvorderkantenstruktur: Verzahnung
- 4: Schaufelvorderkantenstruktur: taschenförmige Aus- nehmungen
- 5: Schaufelvorderkantenstruktur: zurückgeschnittener Abschnitt
- 6: Schaufelvorderkante
- 7: Laminare Grenzschichtströmung
- 8: Transitionspunkt
- 9: Turbulente Grenzschichtströmung
- 10: Verdichtungsstoß, Saugseitenstoß
- 11: Saugseitige Mulde, S-Schlag
- 12: Schaufelspitze
- 13: Saugseite
- 14: Vorderkantenstoß

## Patentansprüche

1. Verdichterschaufel (1), insbesondere für den Fan von Flugzeugtriebwerken, die eine Saugseite (13) und eine Druckseite sowie eine Schaufelvorderkante (6) und eine Schaufelhinterkante umfasst, wobei im Bereich der Schaufelvorderkante (6) ein Vorderkantenstoß (14) sowie auf der Saugseite (13) eine Grenzschichtströmung (9) und ein oszillierender Verdichtungsstoß (10) wirken,
**dadurch gekennzeichnet,**
**dass** die Schaufelvorderkante (6) eine das Abreißen des Vorderkantenstoßes bewirkende Struktur aufweist, die so ausgelegt ist, dass im Betrieb die Saugseite (13) als S-Schlag geformt ist, der im Bereich der laminaren, in einem Transitionspunkt von laminar nach turbulent umschlagenden Grenzschichtströmung (7) eine Mulde (11) bildet, um durch Druckerhöhung die Transition in die turbulente Grenzschichtströmung (9) festzulegen und deren Beschleunigung klein sowie die Grenzschichtströmung (9) selbst konstant zu halten.

## Claims

1. Compressor blade (1), in particular for the fan of aircraft engines, including a suction side (13) and a pressure side as well as a blade leading edge (6) and a blade trailing edge, with a leading edge shock (14) having effect in the area of the blade leading edge (6) and a boundary layer flow (9) as well as an oscillating compression shock (10) having effect on the suction side (13),
**characterized in that**
the blade leading edge (6) has a structure effecting the detachment of the leading edge shock and being designed such that in operation the suction side (13) is given an S shaped curvature, which forms a depression (11) in the area of the laminar boundary layer flow (7), which changes from a laminar flow into a turbulent flow at a transition point, in order to define, by pressure increase the transition into the turbulent boundary layer flow (9) and keep the acceleration of the boundary layer flow (9) low and the boundary layer flow (9) itself constant.

## Revendications

1. Aube de compresseur (1), en particulier destinée à la soufflante de moteurs d'avion, comprenant un côté aspiration (13) et un côté refoulement ainsi qu'un bord d'attaque (6) et un bord de fuite, sachant qu'un choc induit par le bord d'attaque (14) agit dans la zone du bord d'attaque (6) et un écoulement de couche limite (9) ainsi qu'un choc de compression oscillant (10) agissent du côté aspiration (13),
**caractérisée en ce que**
le bord d'attaque (6) possède une structure qui effectue le détachement du choc induit par le bord d'attaque et qui est conçue de telle manière que le côté aspiration (13) durant l'opération a la forme d'une courbure en S formant une concavité (11) dans la zone de l'écoulement de couche limite laminaire (7), qui passe de l'état laminaire à l'état turbulent à un point de transition, afin de définir par élévation de pression le passage à l'écoulement de couche limite (9) turbulent, et de maintenir faible son accélération et constant l'écoulement de couche limite (9) proprement dit.
